# EUROPEAN PATENT SPECIFICATION

(11) **EP 4 254 959 B1**
(45) Date of publication and mention of the grant of the patent: **11.11.2026**
(21) Application number: 22165555.8
(22) Date of filing: 30.03.2022
(51) Int. Cl.: H04N 19/597, H04N 19/46, H04N 13/271

(54) **COMPUTER-IMPLEMENTED METHOD FOR GENERATING AUGMENTED IMAGE DATA, COMPUTER-IMPLEMENTED STREAMING METHOD, IMAGE STREAMING SYSTEM, AND AUGMENTED IMAGE DATA STREAM**
COMPUTERIMPLEMENTIERTES VERFAHREN ZUR ERZEUGUNG ERWEITERTER BILDDATEN, COMPUTERIMPLEMENTIERTES STREAMING-VERFAHREN, BILDSTREAMING-SYSTEM UND ERWEITERTER BILDDATENSTROM
PROCÉDÉ MIS EN OEUVRE PAR ORDINATEUR POUR GÉNÉRER DES DONNÉES D'IMAGES AUGMENTÉES, PROCÉDÉ DE DIFFUSION EN CONTINU MIS EN OEUVRE PAR ORDINATEUR ET FLUX DE DONNÉES D'IMAGES AUGMENTÉES

(43) Date of publication of application: 04.10.2023
(73) Proprietor: Holo-Light GmbH, 6020 Innsbruck (AT)
(72) Inventor: Werlberger, Alexander, 6020 Innsbruck (AT); Landgraf, Philipp, 6020 Innsbruck (AT); Lesiak, Krzysztof, 6020 Innsbruck (AT)
(74) Representative: Prinz & Partner mbB

(56) References cited:
- US-A1- 2013 050 415
- US-A1- 2014 368 610
- US-A1- 2022 020 112

## Description

The invention generally relates to a computer-implemented method for generating augmented image data comprising depth information. The invention further relates to a computer-implemented streaming method for streaming augmented image data comprising depth information, to an image streaming system, and to an augmented image data stream.

Image or video streaming is becoming ever more important for a plurality of different applications. Usually, image data comprising information on the color values of the individual pixels of the respective image is encoded and transmitted to a client-side device. The client-side device decodes the encoded image data, and the color values of the pixels can be extracted from the decoded image data.

For certain applications, it is beneficial to transmit not only the color information to the client-device, but also depth information that is associated with a distance of the respective pixel from a certain reference point, e.g. from a virtual camera. For example, the depth information is useful in XR applications in order to enhance the quality of an image reprojection performed by an XR device.

However, the additional depth information transmitted has to be synchronized with the color information, which introduces additional technical complexity.

Moreover, the data volume of the data to be transmitted is increased significantly due to the additional depth information, particularly because known codecs cannot process the depth information correctly.

US 2022/020112 A1 discloses a computer-implemented method for generating augmented image data comprising depth information according to the preamble of claim 1.

US 2013/050415 A1 discloses a computer-implemented method for generating augmented image data comprising depth information. Color data and distance data are received and compressed. The compressed color data and the compressed distance data are assembled, thereby obtaining an augmented image data frame.

US 2014/368610 A1 discloses a further computer-implemented method for generating augmented image data comprising depth information, wherein two depth maps are embedded into luminance and chrominance components of a single color image.

Thus, the object of the present invention is to provide a method for generating image data, an image streaming method, and an image streaming system that overcome these problems.

According to the invention, the problem is solved by a computer-implemented method for generating augmented image data comprising depth information according to claim 1.

The color frame portion corresponds to the at least one frame and has the first predetermined bit length. The color frame portion comprises the color information associated with the pixels of the at least one image. The frame extension has a second predetermined bit length, and wherein the frame extension comprises the depth information associated with the pixels of the at least one image.

The computer-implemented method according to the present invention is based on the idea to attach the additional information that is to be transmitted, namely the depth information associated with the pixels of the at least one image, to the frame describing the colors of the respective image.

The at least one resulting augmented frame comprises both the color information associated with the at least one image and the depth information (also called "z-buffer") associated with the at least one image. Thus, when the at least one augmented frame is transmitted, the color information and the depth information are inherently synchronized with each other, as the color information and the depth information are comprised in a single frame, namely the augmented frame.

Thus, the obtained augmented image data, i.e. the at least one augmented frame, comprises both the color information associated with the at least one image and the depth information associated with the at least one image.

In other words, it is not necessary to synchronize two data stream transmitting the color information and the depth information, respectively.

Moreover, it has turned out that common encoders, particularly image or video encoders using the H.264/MPEG-4 AVC standard, can efficiently encode the at least one augmented frame, such that the overall data size that is to be transmitted is significantly reduced.

This is due to the fact that the at least one augmented frame looks like a usual image to the decoder, but with an increased number of pixels compared to the at least one image described by the at least one frame.

The at least one augmented frame may be generated in plurality of different ways.

The frame extension may be attached, particularly directly attached, to the at least one frame. Then, the depth data may be written into the frame extension, thereby obtaining the at least one augmented frame.

Alternatively, the depth data may be written into the frame extension first, and the resulting frame extension comprising the depth information may be attached, particularly directly attached, to the at least one frame, thereby obtaining the at least one augmented frame.

Alternatively, at least one new frame having a bit length corresponding to the sum of the first predetermined bit length and the second predetermined bit length may be generated. The image data comprised in the at least one frame and the depth data may be written into the new frame, thereby obtaining the at least one augmented frame.

The depth information may be associated with a distance of the pixels of the image from a certain reference point, e.g. from a virtual camera.

According to the present invention, the first predetermined bit length is equal to the second predetermined bit length. Thus, the at least one augmented frame has a bit length that is equal to two times the first predetermined bit length. Thus, to an encoder, the at least one augmented frame looks like an image having twice the number of pixels of the at least one image described by the at least one frame. It has turned out that common encoders reduce the data volume particularly efficiently if the first predetermined bit length is equal to the second predetermined bit length.

The at least one augmented frame is encoded by means of an encoder. As already mentioned above, the at least one augmented frame obtained by means of the method according to the present invention can be efficiently processed by means of any suitable encoder known in the state of the art. Thus, the encoder may be established as any encoder known in the state of the art that is suitable for a file type of the augmented image data.

The encoder is a video encoder. The encoder may be established as any video encoder known in the state of the art that is suitable for a file type of the augmented image data, e.g. as an encoder using the H.264/MPEG-4 AVC standard.

Therein and in the following, the term "unallocated bits" is understood to denote bits of the frame extension that do not comprise any depth information or transparency information associated with the at least one image.

In an embodiment of the present invention, alpha data is generated or received, wherein the alpha data comprises transparency information associated with the pixels of the at least one image, and wherein the alpha data is written into the frame extension. Thus, additional information associated with the at least one image described by the at least one frame is transmitted together with the color information and the depth information.

Thus, when the at least one augmented frame is transmitted, the color information, the depth information, and the transparency information are inherently synchronized, as the color information, the depth information, and the transparency information are comprised in a single frame, namely the augmented frame.

Moreover, it has turned out that common encoders efficiently reduce the data volume associated with the at least one augmented frame.

In a further embodiment of the present invention, the at least one augmented frame is associated with at least one XR image. Accordingly, the color information associated with the at least one XR image can be transmitted together with the depth information associated with the at least one XR image and, optionally, together with transparency information associated with the at least one XR image. The additionally transmitted depth information may be used by an XR device in order to reproject the at least one XR image, such that the at least one XR image is correctly displayed. Particularly, it is ensured that stable, world-anchored holograms are displayed by the XR device.

Therein and in the following, the term "XR image" is understood to denote an extended reality (XR) image, i.e. an augmented reality (AR) image, a mixed reality (MR) image, and/or a virtual reality (VR) image.

In the case of augmented reality or mixed reality, the at least one XR image corresponds to at least one virtual image that is superimposed over reality.

In the case of virtual reality, the at least one XR image may correspond to at least one purely virtual image.

According to a further aspect of the present invention, the unallocated bits of the frame extension are set to zero.

It has turned out that setting the unallocated bits to zero is particularly suitable for subsequent processing by common encoders. More precisely, common encoders correctly process the at least one augmented frame and efficiently reduce the data volume if the unallocated bits are set to zero.

However, in principle, it is also possible to assign other values to the unallocated bits. For example, all unallocated bits may be set to "1".

A plurality of augmented frames corresponding to different images may be generated, particularly wherein the different images are a series of consecutive images. Particularly, each augmented frame corresponds to exactly one of the different images.

The series of consecutive images may correspond to an image stream or a video stream, particularly to an XR image stream or an XR video stream that is to be displayed on an electronic device.

According to the invention, the problem further is solved by a computer-implemented streaming method for streaming augmented image data comprising depth information according to claim 6.

In other words, the at least one augmented frame is generated as described above. The at least one augmented frame is encoded by means of an encoder of the first electronic device, thereby obtaining the encoded augmented image data. The encoded augmented image data is transmitted to the second electronic device. The encoded augmented image data is decoded by means of the decoder, thereby recovering the at least one augmented frame.

As already mentioned above, the at least one augmented frame obtained by means of the method according to the present invention can be efficiently processed by means of any suitable encoder known in the state of the art. Thus, the data volume associated with the augmented image data stream is efficiently reduced by the encoder.

Moreover, when the encoded augmented frame is transmitted, the color information and the depth information are inherently synchronized with each other, as the color information and the depth information are comprised in a single frame, namely the at least one augmented frame.

In other words, it is not necessary to synchronize two data stream transmitting the color information and the depth information, respectively.

Regarding the further advantages and properties of the computer-implemented streaming method, reference is made to the explanations with respect to the computer-implemented method for generating augmented image data comprising depth information described above, which also hold for the computer-implemented streaming method and vice versa.

According to an aspect of the present invention, the color information associated with the pixels of the at least one image is extracted from the color frame portion. Additionally or alternatively, the depth information is extracted from the frame extension. By decoding the encoded augmented image data, the augmented image data comprising the at least one augmented frame is recovered. The electronic device thus simply can read the color information from the color frame portion of the at least one recovered augmented frame, and the depth information from the frame extension of the at least one recovered augmented frame.

According to the invention, the problem further is solved by an image streaming system. The image streaming system comprises a first electronic device, wherein the first electronic device is configured to perform the computer-implemented method for generating augmented image data comprising depth information described above.

Regarding the advantages and further properties of the image streaming system, reference is made to the explanations with respect to the computer-implemented method for generating augmented image data comprising depth information and with respect to the computer-implemented streaming method described above, which also hold for the image streaming system and vice versa.

In general, the first electronic device may be established as any type of electronic computing device that is configured to have the described functionality.

Particularly, the first electronic device is established as a server. The server may have suitable hardware and suitable software being executed on the hardware that is configured to perform the described functionality.

As another example, the first electronic device may be established as a personal computer, as a laptop, as a notebook, as a MAC, as a tablet, as a smartphone, or as any other type of smart device.

According to an aspect of the present invention, the image streaming system further comprises a second electronic device. The first electronic device and the second electronic device are connected in a signal-transmitting manner. The first electronic device comprises an encoder, wherein the encoder is configured to encode the augmented image data. The second electronic device comprises a decoder, wherein the decoder is configured to decode the encoded augmented image data, thereby recovering the augmented image data. Thus, the image streaming system may be configured to perform the computer-implemented streaming method described above.

Regarding the further advantages and further properties of the image streaming system, reference is made to the explanations with respect to the computer-implemented method for generating augmented image data comprising depth information and with respect to the computer-implemented streaming method described above, which also hold for the image streaming system and vice versa.

Particularly, the image streaming system may be a video streaming system.

According to a further aspect of the present invention, the second electronic device is established as an XR device.

Therein and in the following, the term "XR device" is understood to denote an electronic device that is configured to display an extended reality (XR) image, i.e. an augmented reality (AR) image, a mixed reality (MR) image, and/or a virtual reality (VR) image.

For example, the second electronic device may be configured as a head-mounted display, particularly as an electronic wearable having the shape of glasses.

However, it is to be understood that the second electronic device may be established as any other XR-capable electronic device, e.g. as a smartphone or as a tablet.

Particularly, the second electronic device is configured to reproject the XR image based on the depth information comprised in the at least one augmented frame.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an image streaming system according to the present invention;
- Figure 2 shows a flow chart of a computer-implemented streaming method for streaming augmented image data according to the present invention;
- Figure 3 schematically shows an augmented frame; and
- Figure 4 shows a further exemplary embodiment of the image streaming system of Figure 1.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

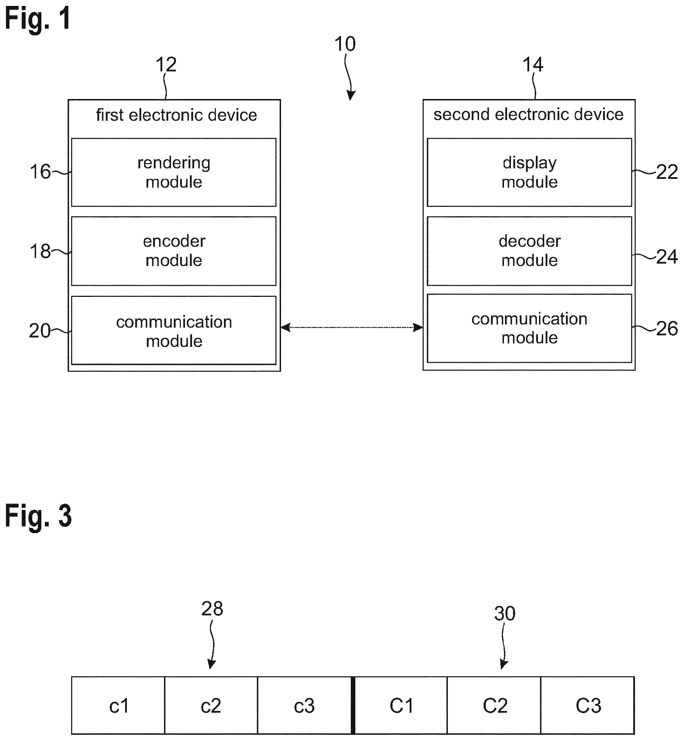

Figure 1 schematically shows a block diagram of an image streaming system 10 comprising a first electronic device 12 and a second electronic device 14.

The first electronic device 12 comprises a rendering module 16, an encoder module 18, and a communication module 20.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

For example, the first electronic device 12 may be established as a server. As another example, the first electronic device 12 may be established as a personal computer, as a laptop, as a notebook, as a MAC, as a tablet, as a smartphone, or as any other type of smart device.

The second electronic device 14 comprises a display module 22, a decoder module 24, and a communication module 26.

In general, the second electronic device 14 is established as any electronic device that is configured to receive an image stream and/or a video stream, and to display the received image stream and/or video stream on a display of the display module 22.

Particularly, the second electronic device 14 may be established as an XR device.

Therein and in the following, the term "XR device" is understood to denote an electronic device that is configured to display an extended reality (XR) image, i.e. an augmented reality (AR) image, a mixed reality (MR) image, and/or a virtual reality (VR) image.

For example, the second electronic device 14 may be configured as a head-mounted display, particularly as an electronic wearable having the shape of glasses.

However, it is to be understood that the second electronic device 14 may be established as any other XR-capable electronic device, e.g. as a smartphone or as a tablet.

The first electronic device 12 and the second electronic device 14 are connected with each other in a signal-transmitting manner.

Therein and in the following, the term "connected in a signal transmitting manner" is understood to denote a cable-based or wireless connection that is configured to transmit signals between the respective devices or components.

More precisely, the communication module 20 of the first electronic device 12 and the communication module 26 of the second electronic device 14 are configured to communicate with each other, such that data can be exchanged between the electronic devices 12, 14, as will be described in more detail below.

For example, the communication modules 20, 26 may be configured to communicate with each other via WLAN, LAN, Ethernet, 4G, 5G or any other suitable type of connection.

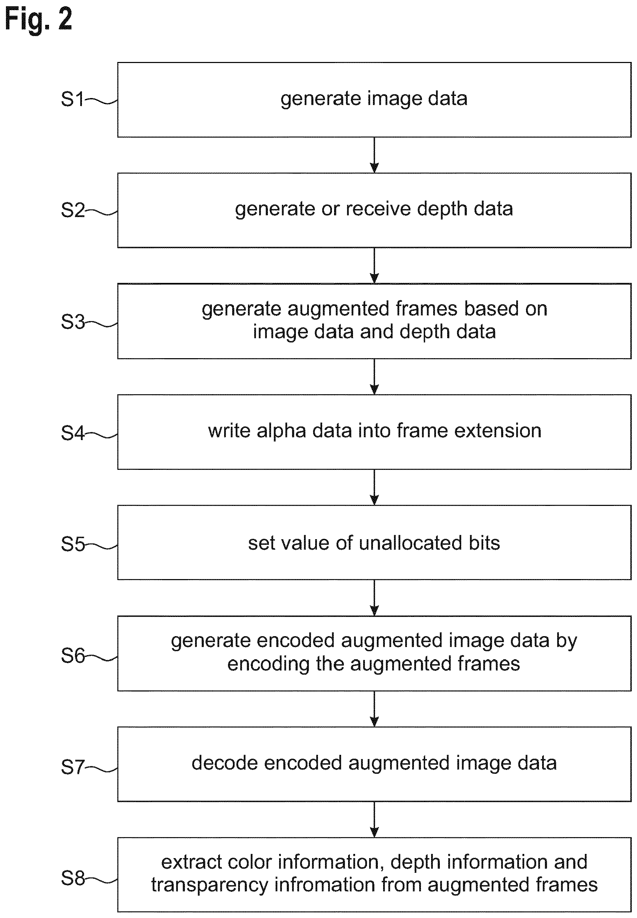

The image streaming system 10 is configured to perform a computer-implemented streaming method for streaming augmented image data comprising depth information. The computer-implemented streaming method is described in the following with reference to Figure 2.

Image data is generated by means of the rendering module 16, wherein the image data comprises at least one frame having a first predetermined bit length (step S1).

The at least one frame comprises color information associated with pixels of at least one image.

In other words, each generated frame comprises the color information for each pixel of one image associated with the respective frame.

While it is possible that only a single image is streamed, usually a series of images, i.e. a video is streamed.

Thus, without restriction of generality, it is assumed in the following that a plurality of frames corresponding to a plurality of consecutive images is generated.

Depth data associated with the plurality of images is received or generated by means of the rendering module 16 (step S2).

The depth data comprises depth information associated with the pixels of the plurality of images.

More precisely, for each of the plurality of images, the depth data comprises the depth information for each pixel of the respective image or for at least for a certain subset of the pixels of the respective image.

The depth information may be associated with a distance of the pixels of the respective image from a certain reference point, e.g. from a virtual camera.

Particularly, the depth information may be associated with a distance of the pixels of the respective image from the second electronic device 14.

A plurality of augmented frames corresponding to the plurality of frames is generated by means of the rendering module 16, wherein the plurality of augmented frames is generated based on the image data and based on the depth data (step S3).

More precisely, for each generated frame a corresponding augmented frame may be generated.

As is illustrated in Figure 3, each generated augmented frame comprises a color frame portion 28 and a frame extension 30.

For illustrative purposes, the color frame portion 28 and the frame extension 30 are separated by a thick line in Figure 3.

The color frame portion 28 comprises the color information associated with the pixels of the corresponding image.

A bit length of the color frame portion 28 is equal to the first predetermined bit length. In other words, the bit length of the color frame portion 28 matches the bit length of the frame describing the corresponding image.

As is further qualitatively illustrated in Figure 3, the color frame portion 28 may comprise a plurality of color channels.

In the particular example shown in Figure 3, the color frame portion 28 comprises three color channels c1, c2, and c3, which may corresponds to the RGB values of the pixels of the respective image.

Of course, any other color-coding scheme may be used. For example, the color frame portion 28 may comprise four color channels corresponding to the CMYK values of the pixels of the respective image.

The frame extension 30 comprises the depth information associated with the pixels of the corresponding image, namely the depth information associated with all pixels of the corresponding image or the depth information associated with a subset of the pixels of the corresponding image.

The frame extension 30 has a second predetermined bit length, such that the overall bit length of the augmented frame corresponds to the sum of the first predetermined bit length and the second predetermined bit length.

Preferably, the second predetermined bit length is equal to the first predetermined bit length, such that the overall bit length of the augmented frame corresponds to twice the first predetermined bit length. Without restriction of generality, this case is described in the following.

In fact, the at least one augmented frame may be generated in plurality of different ways.

The frame extension 30 may be attached, particularly directly attached, to the at least one frame. Then, the depth data may be written into the frame extension 30, thereby obtaining the at least one augmented frame.

Alternatively, the depth data may be written into the frame extension 30 first, and the resulting frame extension comprising the depth information may be attached, particularly directly attached, to the at least one frame, thereby obtaining the at least one augmented frame.

Alternatively, at least one new frame having a bit length corresponding to the sum of the first predetermined bit length and the second predetermined bit length may be generated. The image data comprised in the frame and the depth data may be written into the new frame, thereby obtaining the at least one augmented frame.

To an encoder, the augmented frame looks like a frame describing a picture having twice the amount of pixels. Accordingly, the bits of the frame extension 30 can be grouped into three "color" channels C1, C2, and C3 that would be associated with the color values of the additional (hypothetical) pixels.

Preferably, the depth information is written into the frame extension 30 such that the "color" channels C1, C2, and C3 are consecutively filled with the depth information. It has turned out that encoders process the augmented frame particularly efficiently if the depth information is written into the frame extension 30 in this way.

In other words, the first "color" channel C1 is filled with the depth information first. If the first "color" channel C1 is full, then the remaining depth information is written into the second "color" channel C2, etc.

However, it is also possible that the depth information is distributed over the "color" channels C1, C2, and C3.

Optionally, alpha data is generated or received by means of the rendering module 16, and the alpha data is written into the frame extension 30 (step S4).

The alpha data comprises transparency information associated with the pixels of the images.

The alpha data may be written into the frame extension 30 analogously to the explanations given above with respect to the depth information.

A value of unallocated bits of the frame extension 30 is set to a predefined value (step S5).

Therein and in the following, the term "unallocated bits" is understood to denote bits of the frame extension 30 that do not comprise any depth information or transparency information associated with the corresponding image.

Preferably, the unallocated bits of the frame extension 30 are set to zero.

However, in principle, it is also possible to assign other values to the unallocated bits. For example, the unallocated bits may all be set to "1".

The augmented frames are encoded by means of the encoder module 18, thereby obtaining encoded augmented image data (step S6).

The encoder module 18 may employ any type of encoder known in the state of the art that is suitable for a file type of the augmented image data.

Particularly, the encoder may be a video encoder, for example an encoder using the H.264/MPEG-4 AVC standard.

The encoded augmented image data is transmitted to the second electronic device by means of the communication modules 20, 26.

The encoded augmented image data is decoded by means of the decoder module 24, thereby recovering the augmented image data comprising the augmented frames (step S7).

The decoder module 24 may employ any type of decoder known in the state of the art that is compatible with the encoder employed by the encoder module 18 of the first electronic device 12.

The color information, the depth information and, optionally, the transparency information are extracted from the augmented frames by means of the display module 22 (step S8).

More precisely, the color information associated with the pixels of the respective image is extracted from the color frame portion 28 of the respective augmented frame.

The depth information and the transparency information associated with the pixels of the respective image are extracted from the frame extension 30 of the respective augmented frame.

The images corresponding to the augmented frames may be displayed on a display of the display module 22 based on the extracted color information, based on the extracted depth information and, optionally, based on the extracted transparency information.

For example, the display module 22 may adapt certain properties of the images based on the extracted depth information and, optionally, based on the extracted transparency information, such that the images are correctly displayed.

In fact, positions of one, several or all pixels of the images may be adapted based on the extracted depth information.

In other words, the display module 22 may reproject the images based on the extracted depth information and, optionally, based on the extracted transparency information, such that the images are correctly displayed.

Alternatively or additionally, color values of one, several or all pixels of the images may be adapted based on the extracted depth information and/or based on the extracted transparency information.

The explanations given above apply to arbitrary image and/or video streaming systems.

However, the depth information transmitted together with the color information is particularly useful for XR image streaming or XR video streaming.

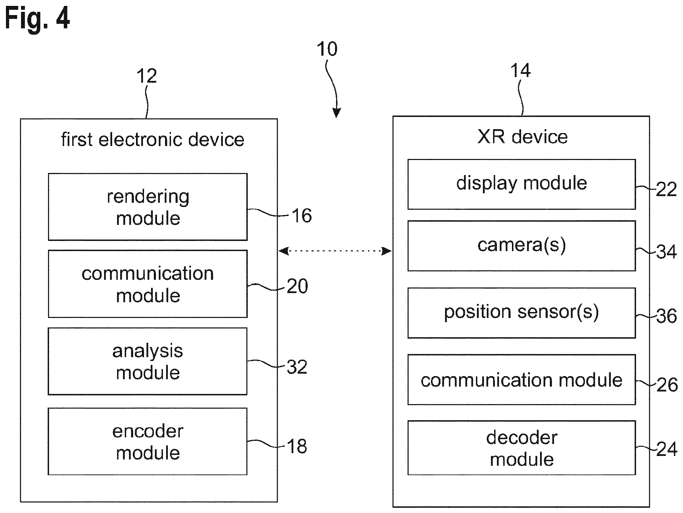

Figure 4 shows an exemplary embodiment of the image streaming system 10, wherein the image streaming system 10 is established as an XR image streaming system.

In general, the image streaming system 10 shown in Figure 4 allows a user to observe and/or interact with virtual objects, particularly virtual 3D objects.

Accordingly, the second electronic device 14 or rather the display module 22 is configured display at least one XR image, such that the virtual object is displayed to the user.

If the image streaming system 10 is an AR image streaming system or an MR image streaming system, these virtual objects are embedded into a real environment of the user.

If the image streaming system 10 is a VR image streaming system, the images displayed by the display module 22 may be completely virtual.

In the following, only the differences compared to the embodiment shown in Figure 1 are explained.

The first electronic device 12 comprises an analysis module 32.

In fact, the analysis module 32 may be integrated into the first electronic device 12 or into the second electronic device 14.

The second electronic device 14 is established as an XR device, for example as a head-mounted display, as a smartphone, or as a tablet.

The second electronic device 14 may comprise at least one camera 34, and at least one position sensor 36.

The at least one camera 34 is configured to capture images of an environment of the second electronic device 14, particularly of an environment in front of the second electronic device 14.

Particularly, the at least one camera 34 may be established as a stereo camera. Alternatively or additionally, the second electronic device 14 may comprise several cameras with overlapping field of view.

Thus, depth-information on images taken by the at least one camera 34 can be determined based on images taken by the at least one camera 34.

The at least one position sensor 36 is configured to determine a position, i.e. a location and/or orientation of the second electronic device 14.

For example, the at least one position sensor 36 may be established as a gyroscope, as an acceleration sensor, as a magnetometer, as a GNSS device, and/or as any other suitable type of position sensor.

In general, the image streaming system 10 shown in Figure 4 is also configured to perform the computer-implemented streaming method described above. However, the following modifications to the individual steps may be applied:
In step S1, the image data may be generated based on momentary position data, wherein the momentary position data is associated with a momentary position of the second electronic device 14.

The momentary position data may be determined by means of the at least one position sensor 36 of the second electronic device 14.

Alternatively or additionally, the momentary position data may be determined by means of at least one external camera, i.e. at least one camera that is not integrated into the second electronic device 14.

The at least one external camera may be connected to the analysis module 32, wherein the analysis module 32 is configured to determine the momentary position data based on images of the second electronic device 14 captured by means of the at least one external camera.

Optionally, the second electronic device 14 may comprise one or several light-emitting elements, particularly one or several LEDs. The analysis module 32 may determine the momentary position data based on images of the one or several light-emitting elements captured by means of the at least one external camera, particularly via triangulation.

Further, it is also conceivable that the analysis module 32 may determine the momentary position data based on images captured by means of the at least one camera 34.

The momentary position data is transmitted to the rendering module 16 via the communication modules 20, 26.

In step S2, depth information on images taken by the at least one camera 34 may be determined by means of the analysis module 32 based on the images taken by the at least one camera 34.

The depth information may be transmitted to the rendering module 16 via the communication modules 20, 26.

The depth data associated with the pixels of the at least one image generated by the rendering module 16 may be generated by means of the rendering module 16 based on the depth information received.

Steps S3 to S8 may be performed as described above.

Updated position data may be determined, wherein the updated position data is associated with a position of the second electronic device 14 at the time at which the at least one XR image is to be displayed on the second electronic device 14.

The updated position data may be determined by means of the at least one position sensor 36 or by any of the other techniques described above.

The display module 22 may reproject the at least one XR image based on the momentary position data, based on the updated position data, and based on the depth information extracted from the augmented image data, thereby obtaining at least one reprojected XR image.

The at least one reprojected XR image corresponds to the at least one XR image to be displayed on the second electronic device 14, which is shifted appropriately such that the at least one XR image is correctly displayed at the position corresponding to the updated position data.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A computer-implemented method for generating augmented image data comprising depth information, wherein the method comprises the following steps:
- generating or receiving image data, wherein the image data is described by at least one frame having a first predetermined bit length, wherein the at least one frame comprises color information associated with pixels of at least one image;
- generating or receiving depth data, wherein the depth data comprises depth information associated with the pixels of the at least one image;
- generating at least one augmented frame based on the image data and based on the depth data, wherein the at least one augmented frame comprises a color frame portion (28) and a frame extension (30) attached to the color frame portion (28); and
- encoding the at least one augmented frame by means of an encoder, thereby obtaining encoded augmented image data;
wherein the color frame portion (28) corresponds to the at least one frame and has the first predetermined bit length, wherein the color frame portion (28) comprises the color information associated with the pixels of the at least one image, wherein the bit length of the color frame portion (28) matches the bit length of the frame describing the corresponding image, wherein the color frame portion (28) comprises a plurality of color channels (c1, c2, c3),
wherein the frame extension (30) has a second predetermined bit length, and wherein the frame extension (30) comprises the depth information associated with the pixels of the at least one image,
**characterized in that** the first predetermined bit length is equal to the second predetermined bit length so that the at least one augmented frame has a bit length that is equal to two times the first predetermined bit length, such that, to the encoder, the at least one augmented frame looks like an image having twice the number of pixels of the at least one image described by the at least one frame,
wherein the bits of the frame extension (30) are grouped into color channels (C1, C2, C3) and wherein the depth information is written into the frame extension (30) such that the color channels (C1, C2, C3) are consecutively filled with the depth information, such that a next colour channel (C1, C2, C3) is only filled with depth information once the previous colour channel is full,
wherein unallocated bits of the frame extension (30) are set to a predefined value, wherein the unallocated bits of the frame extension (30) do not comprise any depth information or transparency information associated with the at least one image, wherein the encoder is a video encoder.

2. The computer-implemented method according to claim 1, wherein alpha data is generated or received, wherein the alpha data comprises transparency information associated with the pixels of the at least one image, and wherein the alpha data is written into the frame extension (30).

3. The computer-implemented method according to any one of the preceding claims, wherein the at least one augmented frame is associated with at least one extended reality, XR, image.

4. The computer-implemented method according to any one of the preceding claims, wherein the unallocated bits of the frame extension (30) are set to zero.

5. The computer-implemented method according to any one of the preceding claims, wherein a plurality of augmented frames corresponding to different images is generated, particularly wherein the different images are a series of consecutive images.

6. A computer-implemented streaming method for streaming augmented image data comprising depth information, wherein the streaming method comprises the following steps:
- Generating, by a first electronic device (12), augmented image data and encoding the augmented image data by means of the encoder by means of a computer-implemented method according to any one of claims 1 to 5, thereby obtaining encoded augmented image data;
- transmitting the encoded augmented image data to a second electronic device (14), wherein the second electronic device (14) comprises a decoder; and
- decoding the encoded augmented image data by means of the decoder, thereby recovering the augmented image data.

7. The computer-implemented streaming method of claim 6, wherein in the second electronic device (14) the color information associated with the pixels of the at least one image is extracted from the color frame portion (28), and wherein the depth information is extracted from the frame extension (30).

8. An image streaming system, wherein the image streaming system comprises a first electronic device (12), wherein the first electronic device (12) is configured to perform the computer-implemented method according to any one of claims 1 to 5.

9. The image streaming system of claim 8, wherein the first electronic device (12) is established as a server.

10. The image streaming system of claim 8 or 9, wherein the image streaming system further comprises a second electronic device (14),
wherein the first electronic device (12) and the second electronic device (14) are connected in a signal-transmitting manner,
wherein the first electronic device (12) comprises an encoder, wherein the encoder is configured to encode the augmented image data,
wherein the second electronic device (14) comprises a decoder, wherein the decoder is configured to decode the encoded augmented image data, thereby recovering the augmented image data.

11. The image streaming system of claim 10, wherein the second electronic device (14) is established as an extended reality, XR, device.

## Patentansprüche

1. Computerimplementiertes Verfahren zur Erzeugung von erweiterten Bilddaten, die Tiefeninformationen umfassen, wobei das Verfahren folgende Schritte umfasst:
- Erzeugen oder Empfangen von Bilddaten, wobei die Bilddaten durch mindestens einen Frame mit einer ersten vorgegebenen Bitlänge beschrieben werden, wobei der mindestens eine Frame Farbinformationen umfasst, die Pixeln mindestens eines Bildes zugeordnet sind;
- Erzeugen oder Empfangen von Tiefendaten, wobei die Tiefendaten Tiefeninformationen umfassen, die den Pixeln des mindestens einen Bildes zugeordnet sind;
- Erzeugen mindestens eines erweiterten Frames auf der Grundlage der Bilddaten und auf der Grundlage der Tiefendaten, wobei der mindestens eine erweiterte Frame einen Farbframeabschnitt (28) und eine an den Farbframeabschnitt (28) angehängte Frameerweiterung (30) umfasst; und
- Codieren des mindestens einen erweiterten Frames mittels eines Codierers, wodurch codierte erweiterte Bilddaten erhalten werden;
wobei der Farbframeabschnitt (28) dem mindestens einen Frame entspricht und die erste vorbestimmte Bitlänge hat, wobei der Farbframeabschnitt (28) die den Pixeln des mindestens einen Bildes zugeordneten Farbinformationen umfasst, wobei die Bitlänge des Farbframeabschnitts (28) mit der Bitlänge des das entsprechende Bild beschreibenden Frames übereinstimmt, wobei der Farbframeabschnitt (28) mehrere Farbkanäle (c1, c2, c3) umfasst,
wobei die Frameerweiterung (30) eine zweite vorbestimmte Bitlänge hat und wobei die Frameerweiterung (30) die den Pixeln des mindestens einen Bildes zugeordneten Tiefeninformationen umfasst,
**dadurch gekennzeichnet, dass** die erste vorbestimmte Bitlänge der zweiten vorbestimmten Bitlänge entspricht, so dass der mindestens eine erweiterte Frame eine Bitlänge hat, die dem Doppelten der ersten vorbestimmten Bitlänge entspricht, so dass für den Codierer der mindestens eine erweiterte Frame wie ein Bild aussieht, das die doppelte Anzahl an Pixeln des mindestens einen Bildes aufweist, das durch den mindestens einen Frame beschrieben wird,
wobei die Bits der Frameerweiterung (30) in Farbkanäle (C1, C2, C3) gruppiert sind und wobei die Tiefeninformationen so in die Frameerweiterung (30) geschrieben werden, dass die Farbkanäle (C1, C2, C3) nacheinander mit der Tiefeninformation gefüllt werden, so dass ein nachfolgender Farbkanal (C1, C2, C3) erst dann mit Tiefeninformationen gefüllt wird, wenn der vorhergehende Farbkanal voll ist,
wobei nicht zugewiesene Bits der Frameerweiterung (30) auf einen vordefinierten Wert gesetzt werden, wobei die nicht zugewiesenen Bits der Frameerweiterung (30) keine Tiefeninformationen oder Transparenzinformationen enthalten, die dem mindestens einen Bild zugeordnet sind, wobei der Codierer ein Videocodierer ist.

2. Computerimplementiertes Verfahren nach Anspruch 1, wobei Alpha-Daten erzeugt oder empfangen werden, wobei die Alpha-Daten Transparenzinformationen umfassen, die den Pixeln des mindestens einen Bildes zugeordnet sind, und wobei die Alpha-Daten in die Frameerweiterung (30) geschrieben werden.

3. Computerimplementiertes Verfahren nach einem der vorhergehenden Ansprüche, wobei der mindestens eine erweiterte Frame mindestens einem Extended-Reality-Bild (XR-Bild) zugeordnet ist.

4. Computerimplementiertes Verfahren nach einem der vorhergehenden Ansprüche, wobei die nicht zugewiesenen Bits der Frameerweiterung (30) auf Null gesetzt werden.

5. Computerimplementiertes Verfahren nach einem der vorhergehenden Ansprüche, wobei mehrere erweiterte Frames erzeugt werden, die verschiedenen Bildern entsprechen, insbesondere wobei die verschiedenen Bilder eine Reihe aufeinanderfolgender Bilder sind.

6. Computerimplementiertes Streaming-Verfahren zum Streamen von erweiterten Bilddaten, die Tiefeninformationen umfassen, wobei das Streaming-Verfahren folgende Schritte umfasst:
- Erzeugen von erweiterten Bilddaten durch ein erstes elektronisches Gerät (12) und Codieren der erweiterten Bilddaten mittels des Codierers durch ein computerimplementiertes Verfahren nach einem der Ansprüche 1 bis 5, wodurch codierte erweiterte Bilddaten erhalten werden;
- Übertragen der codierten erweiterten Bilddaten an ein zweites elektronisches Gerät (14), wobei das zweite elektronische Gerät (14) einen Decodierer umfasst; und
- Decodieren der codierten erweiterten Bilddaten mittels des Decodierers, wodurch die erweiterten Bilddaten wiederhergestellt werden.

7. Computerimplementiertes Streaming-Verfahren nach Anspruch 6, wobei im zweiten elektronischen Gerät (14) die den Pixeln des mindestens einen Bildes zugeordneten Farbinformationen aus dem Farbframeabschnitt (28) extrahiert werden und wobei die Tiefeninformationen aus der Frameerweiterung (30) extrahiert werden.

8. Bild-Streaming-System, wobei das Bild-Streaming-System ein erstes elektronisches Gerät (12) umfasst, wobei das erste elektronische Gerät (12) zur Ausführung des computerimplementierten Verfahrens nach einem der Ansprüche 1 bis 5 konfiguriert ist.

9. Bild-Streaming-System nach Anspruch 8, wobei das erste elektronische Gerät (12) als Server eingerichtet ist.

10. Bild-Streaming-System nach Anspruch 8 oder 9, wobei das Bild-Streaming-System ferner ein zweites elektronisches Gerät (14) umfasst,
wobei das erste elektronische Gerät (12) und das zweite elektronische Gerät (14) signalübertragend miteinander verbunden sind,
wobei das erste elektronische Gerät (12) einen Codierer umfasst, wobei der Codierer zum Codieren der erweiterten Bilddaten konfiguriert ist,
wobei das zweite elektronische Gerät (14) einen Decodierer umfasst, wobei der Decodierer zum Decodieren der codierten erweiterten Bilddaten konfiguriert ist, wodurch die erweiterten Bilddaten wiederherstellt werden.

11. Bild-Streaming-System nach Anspruch 10, wobei das zweite elektronische Gerät (14) als Extended-Reality-Gerät (XR-Gerät) eingerichtet ist.

## Revendications

1. Procédé mis en œuvre par ordinateur pour générer des données d'image augmentées comprenant des informations de profondeur, le procédé comprenant les étapes suivantes :
- générer ou recevoir des données d'image, les données d'image étant décrites par au moins une trame présentant une première longueur en bits prédéterminée, ladite au moins une trame comprenant des informations de couleur associées à des pixels d'au moins une image ;
- générer ou recevoir des données de profondeur, les données de profondeur comprenant des informations de profondeur associées aux pixels de ladite au moins une image ;
- générer au moins une trame augmentée sur la base des données d'image et sur la base des données de profondeur, ladite au moins une trame augmentée comprenant une partie de trame couleur (28) et une extension de trame (30) rattachée à la partie de trame couleur (28) ; et
- coder ladite au moins une trame augmentée au moyen d'un codeur, obtenant ainsi des données d'image augmentées codées ;
la partie de trame couleur (28) correspondant à ladite au moins une trame et présentant la première longueur en bits prédéterminée, la partie de trame couleur (28) comprenant les informations de couleur associées aux pixels de ladite au moins une image, la longueur en bits de la partie de trame couleur (28) correspondant à la longueur en bits de la trame décrivant l'image correspondante, la partie de trame couleur (28) comprenant une pluralité de canaux de couleur (c1, c2, c3),
l'extension de trame (30) présentant une deuxième longueur en bits prédéterminée, et l'extension de trame (30) comprenant les informations de profondeur associées aux pixels de ladite au moins une image,
**caractérisé en ce que** la première longueur en bits prédéterminée est égale à la deuxième longueur en bits prédéterminée, de sorte que ladite au moins une trame augmentée présente une longueur en bits égale au double de la première longueur en bits prédéterminée, de sorte que, pour le codeur, ladite au moins une trame augmentée apparait comme une image comportant le double du nombre de pixels de ladite au moins une image décrite par ladite au moins une trame,
les bits de l'extension de trame (30) étant regroupés en canaux de couleur (C1, C2, C3), et les informations de profondeur étant écrites dans l'extension de trame (30) de telle sorte que les canaux de couleur (C1, C2, C3) sont remplis consécutivement avec les informations de profondeur, de sorte qu'un canal de couleur (C1, C2, C3) suivant est uniquement rempli d'informations de profondeur une fois que le canal de couleur précédent est plein,
des bits non alloués de l'extension de trame (30) étant mis à une valeur prédéfinie, les bits non alloués de l'extension de trame (30) ne comprenant aucune information de profondeur ni aucune information de transparence associée à ladite au moins une image, le codeur étant un codeur vidéo.

2. Procédé mis en œuvre par ordinateur selon la revendication 1, des données alpha étant générées ou reçues, les données alpha comprenant des informations de transparence associées aux pixels de ladite au moins une image, et les données alpha étant écrites dans l'extension de trame (30).

3. Procédé mis en œuvre par ordinateur selon l'une des revendications précédentes, ladite au moins une trame augmentée étant associée à au moins une image de réalité étendue, XR.

4. Procédé mis en œuvre par ordinateur selon l'une des revendications précédentes, les bits non alloués de l'extension de trame (30) étant mis à zéro.

5. Procédé mis en œuvre par ordinateur selon l'une des revendications précédentes, une pluralité de trames augmentées correspondant à différentes images étant générée, les différentes images étant en particulier une série d'images consécutives.

6. Procédé de streaming mis en œuvre par ordinateur pour des données d'images augmentées de streaming comprenant des informations de profondeur, le procédé de streaming comprenant les étapes suivantes :
- générer, au moyen d'un premier appareil électronique (12), des données d'images augmentées et coder les données d'images augmentées au moyen du codeur selon un procédé mis en œuvre par ordinateur selon l'une des revendications 1 à 5, obtenant ainsi des données d'images augmentées codées ;
- transmettre les données d'images augmentées codées vers un deuxième appareil électronique (14), le deuxième appareil électronique (14) comprenant un décodeur ; et
- décoder les données d'images augmentées codées au moyen du décodeur, récupérant ainsi les données d'images augmentées.

7. Procédé de streaming mis en œuvre par ordinateur selon la revendication 6, les informations de couleur associées aux pixels de ladite au moins une image étant extraites de la partie de trame couleur (28), et les informations de profondeur étant extraites de l'extension de trame (30) dans le deuxième appareil électronique (14).

8. Système de streaming d'images, le système de streaming d'images comprenant un premier appareil électronique (12), le premier appareil électronique (12) étant configuré de manière à exécuter le procédé mis en œuvre par ordinateur selon l'une des revendications 1 à 5.

9. Système de streaming d'images selon la revendication 8, le premier appareil électronique (12) étant établi en tant que serveur.

10. Système de streaming d'images selon la revendication 8 ou 9, le système de streaming d'images comprenant en outre un deuxième appareil électronique (14),
le premier appareil électronique (12) et le deuxième appareil électronique (14) étant connectés de manière à transmettre des signaux,
le premier appareil électronique (12) comprenant un codeur, le codeur étant configuré de manière à coder les données d'image augmentées,
le deuxième appareil électronique (14) comprenant un décodeur, le décodeur étant configuré de manière à décoder les données d'image augmentées codées, récupérant ainsi les données d'image augmentées.

11. Système de streaming d'images selon la revendication 10, le deuxième appareil électronique (14) étant établi en tant qu'appareil de réalité étendue, XR.
